(19) Europäisches Patentamt
European Patent Office
Office européen des brevets

(11) EP 2 372 899 A1

(12) **EUROPEAN PATENT APPLICATION**
published in accordance with Art. 153(4) EPC

(43) Date of publication:
05.10.2011 Bulletin 2011/40

(21) Application number: 09834107.6

(22) Date of filing: 24.12.2009

(51) Int Cl.:
$H02P\ 21/00$ (2006.01)　　　$H02P\ 21/14$ (2006.01)

(86) International application number:
PCT/CN2009/075929

(87) International publication number:
WO 2010/072154 (01.07.2010 Gazette 2010/26)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 25.12.2008  CN 200810208061

(71) Applicant: Sany Electric Co., Ltd.
Huilongguan
Changping District
Beijing 102206 (CN)

(72) Inventors:
• REN, Xiaofeng
  Beijing 102206 (CN)
• WEI, Ru
  Beijing 102206 (CN)

(74) Representative: Schmitz, Alexander
Maiwald Patentanwalts GmbH
Elisenhof
Elisenstrasse 3
80335 München (DE)

(54) **AUTOMATIC DETECTION METHOD AND APPARATUS FOR ROTOR INITIAL POSITION ANGLE OF DOUBLE-FED MACHINE**

(57)　　An automatic detection method and apparatus for a rotor initial position angle of a double-fed machine (2). The method comprises the following steps: giving a reference voltage angle $\theta_{given}$, and combining with a given reference voltage amplitude $V_{ref}$ to generate a reference voltage vector; converting the reference voltage vector into a driving signal by space vector width modulation SVPWM to drive a rotor side PWM converter (5) to generate an alternating current voltage signal and apply it to a rotor winding of the double-fed machine (2); obtaining a rotor mechanical angle $n*\theta_{rotor}$ of the double-fed machine (2); obtaining a stator voltage vector angle $\theta_1$, and subtracting the rotor mechanical angle $n*\theta_{rotor}$ and the given reference voltage angle $\theta_{given}$ from the stator voltage vector angle $\theta_1$ to obtain the rotor initial position angle $\theta_{initial}$; wherein n is the number of pole pairs of the double-fed machine (2). The automatic detection for the rotor initial position angle of the double-fed machine (2) can be realized through adopting the method and apparatus.

generating a reference voltage vector from a given reference voltage angle and a given reference voltage amplitude — S501

converting the reference voltage vector into a drive signal through SVPWM, and sending it to a rotor-side PWM transformer — S502

the rotor-side PWM transformer converts a DC signal into an AC voltage signal according to the drive signal, and applies the AC voltage signal to a rotor winding of the doubly-fed electric machine — S503

acquiring a rotor mechanical angle of the doubly-fed electric machine — S504

acquiring a stator voltage vector angle — S505

obtain the initial rotor position angle from the given reference voltage angle, the rotor mechanical angle and the stator voltage vector angle — S506

**FIG. 5**

EP 2 372 899 A1

## Description

This application claims priority to Chinese patent application NO.200810208061.1, filed with the State Intellectual Property Office on December 25, 2008 and titled "Method and apparatus for automatic detection of initial rotor position angle of doubly-fed electric machine", which is hereby incorporated by reference in its entirety.

## Field of the Invention

The present invention relates to the field of electric machine control and in particular to a method and an apparatus for automatic detection of an initial rotor position angle of a doubly-fed electric machine.

## Background of the Invention

To precisely control the torque of an Alternating Current (AC) asynchronous or synchronous electric machine, normally, vector control is used; and to ensure the precision of vector control, accurate position of the rotor winding of the electric machine has to be obtained.

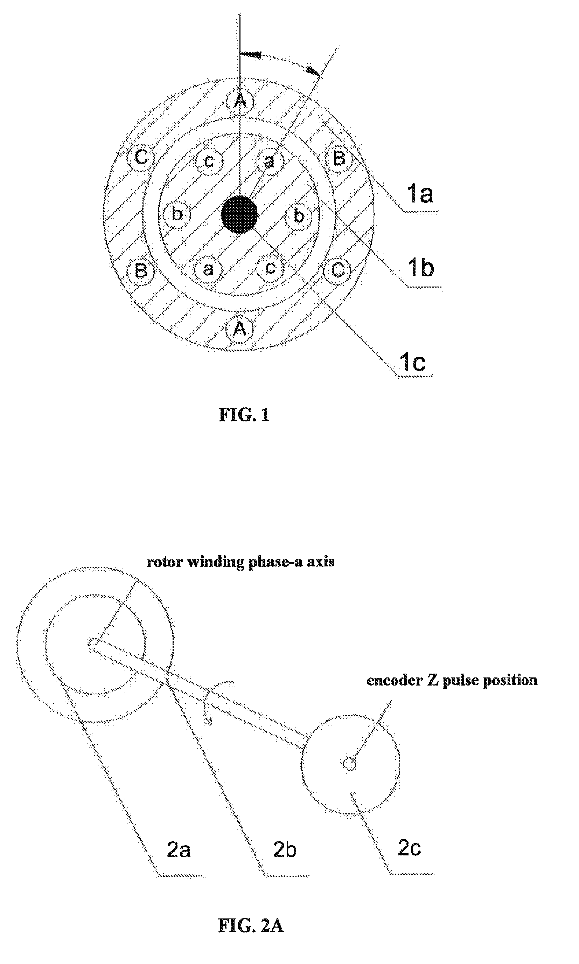

Reference is made to FIG. 1, illustrating a position angle of a rotor winding of a doubly-fed electric machine.

The doubly-fed electric machine includes a stator winding 1a, a rotor winding 1b, and an electric machine shaft 1c. A, 8 and C represent the three phases of the stator, and a, b and c represent the three phases of the rotor. When the doubly-fed electric machine operates, the positions of the stator phases A, B and C are fixed, and the positions of the rotor phases a, b and c change with the operation of the electric machine.

At any time, the position angle of the rotor winding of the doubly-fed electric machine is the angle between the stator phase-A axis and the rotor phase-a axis.

The position angle of the rotor winding consists of an initial rotor position angle, and a relative angle at which the rotor rotates.

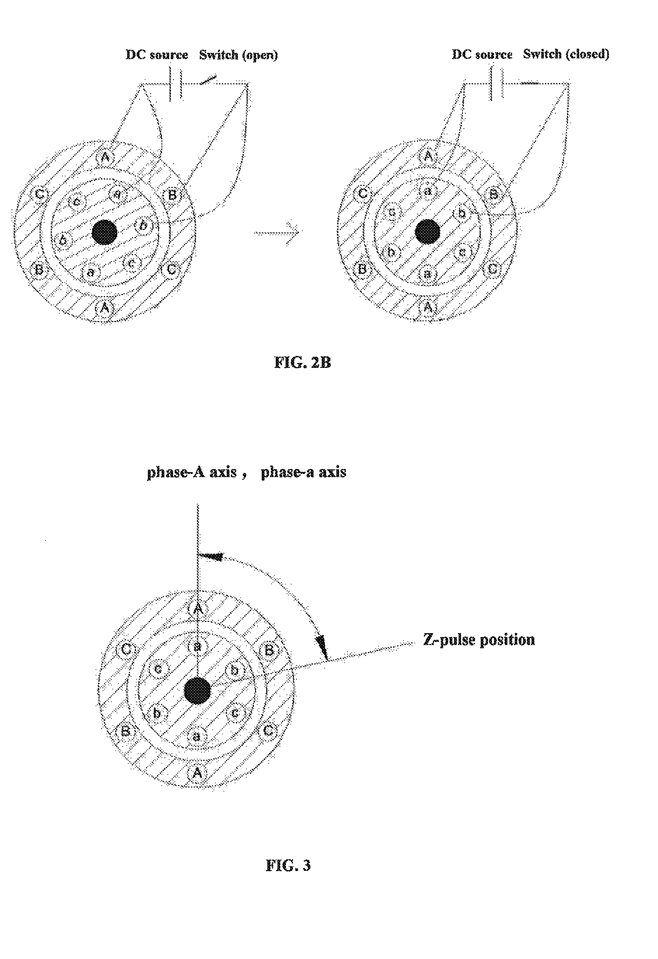

Reference is made to FIG. 2A and FIG. 2B, illustrating a structural diagram and a circuit diagram of an apparatus in the prior art for determining a position angle of a rotor winding of a doubly-fed electric machine.

The apparatus includes: a doubly-fed electric machine 2a, a shaft, coupler 2b, and an incremental photoelectric encoder 2c. The incremental photoelectric encoder 2c is connected coaxially to the rotor of the doubly-fed electric machine 2a through the shaft coupler 2b.

The incremental photoelectric encoder 2c outputs three pulses: A, B and Z. When the shaft rotates clockwise, A pulse leads B pulse by 90˚; and when the shaft rotates counterclockwise, B pulse leads A pulse by 90˚. Meanwhile, the incremental photoelectric encoder 2c outputs a Z pulse (i.e., zero position pulse) at a fixed position per revolution.

A conventional method uses a counter to count the number of A pulses, and resets the counter when a Z pulse is detected. For example, for a single-pole-pair electric machine, the position angle of the rotor winding is given by:

$$\text{Position angle of rotor winding} = 360° \times \frac{\text{Counter value} - \text{Zero position counter value}}{\text{Number of pulses per revolution}} \qquad (1)$$

To obtain the accurate position angle of the rotor winding, the value of the counter starting from the position where the stator axis and the rotor axis coincide with each other to the Z pulse position has to be determined. Therefore, the initial rotor position angle is to be determined, to obtain the value of the counter when the rotor is at the zero position, and hence the position angle of the rotor winding.

Reference is made to FIG. 3, illustrating an initial rotor phase angle of a doubly-fed electric machine.

The initial rotor position angle is the angle between the rotor phase a and the Z pulse position.

According to a conventional method for determining an initial rotor phase angle, for example, for a single-pole-pair electric machine, an encoder is attached to the shaft of the rotor of the electric machine, then the rotor and the encoder connected coaxially with the rotor are rotated, and the position where the encoder outputs the Z pulse (position 1) is recorded. Then, as shown in FIG. 2B, a Direct Current (DC) voltage is applied between the rotor phases a and b and between the stator phases A and B. Thus, the magnetic field of the rotor interacts with the magnetic field of the stator, and the rotor rotates automatically to the position where the phase-A axis and the phase-a axis coincide with each other (position 2). The angle between position 1 and position 2 is the initial position angle between the stator and the rotor.

Unfortunately, the conventional method has the drawbacks that it requires manual operation, additional equipment and power source; and the procedure is complex and thus vulnerable to mistakes,

In addition, if the encoder is changed, the initial rotor phase angle has to be re-determined, and corresponding values in the program have to be modified.

## Summary of the Invention

A technical problem to be solved by the present invention is to provide a method and an apparatus for automatic detection of an initial rotor position angle of a doubly-fed electric machine, thereby realizing automatic detection of the initial rotor position angle.

In order to solve the technical solution above, the present invention provides a method for automatic detection of an initial rotor position angle of a doubly-fed electric machine, including:

generating a reference voltage vector from a given reference voltage angle $\theta_{given}$ and a given reference voltage amplitude $V_{ref}$;

converting the reference voltage vector into a drive signal through Space Vector Pulse Width Modulation (SVPWM) to drive a rotor-side Pulse Width Modulation (PWM) transformer to generate an Alternating Current (AC) voltage signal, and applying the AC voltage signal to a rotor winding of the doubly-fed electric machine;

acquiring a rotor mechanical angle $n \times \theta_{rotor}$ of the doubly-fed electric machine;

acquiring a stator voltage vector angle $\theta_1$ ; and

subtracting the rotor mechanical angle $n \times \theta_{rotor}$ and the given reference voltage angle $\theta_{given}$ from the stator voltage vector angle $\theta_1$ to obtain the initial rotor position angle $\theta_{inital}$,

wherein n is the number of pole pairs of the doubly-fed electric machine.

Preferably, after obtaining the initial rotor position angle $\theta_{inital}$, the method further includes:

giving a rotor voltage vector angle $\theta_{S1}$ and acquiring a rotor current vector angle $\theta_{S2}$;

calculating an error angle $\theta_{err}$ from the rotor voltage vector angle $\theta_{S1}$ and the rotor current vector angle $\theta_{S2}$ by the

equation of $\theta_{err} = \dfrac{\pi}{2} - (\theta_{S1} - \theta_{S2})$ ;; and

adjusting the calculated initial rotor position angle $\theta_{inital}$ with the calculated error angle $\theta_{err}$ to obtain an adjusted initial rotor position angle $\theta'_{inital}$ by the equation of $\theta'_{inital} = \theta_{inital} + (\dfrac{\pi}{2} - \theta_{err})$.

Preferably, the rotor of the doubly-fed electric machine is in motion or rotates by at least one round.
The present invention also provides an apparatus for automatic detection of an initial rotor position angle of a doubly-fed electric machine, including: a reference voltage angle giving unit, a reference voltage amplitude giving unit, a first multiplier, SVPWM, a rotor mechanical angle acquisition unit, a stator voltage vector angle acquisition unit and a first comparator, wherein
the reference voltage angle giving unit is configured to give a reference voltage angle and output it to an input of the first multiplier and a negative input of the first comparator;
the reference voltage amplitude giving unit is configured to give a reference voltage amplitude $V_{ref}$ and output it to an input of the first multiplier;
the first multiplier is configured to multiply the given reference voltage angle $\theta_{given}$ by the given reference voltage amplitude $V_{ref}$ and to output a reference voltage vector to the SVPWM;
the SVPWM is configured to convert the reference voltage vector into a drive signal and send it to a rotor-side PWM transformer;
the rotor mechanical angle acquisition unit is configured to acquire a rotor mechanical angular speed $n \times \theta_{rotor}$ and output it to the negative input of the first comparator;
the stator voltage vector angle acquisition unit is configured to acquire a stator voltage vector angle $\theta_1$ and output it to a positive input of the first comparator; and
the first comparator is configured to subtract the rotor mechanical angular speed $n \times \theta_{rotor}$ and the given reference voltage

angle $\theta_{given}$ from the stator voltage vector angle $\theta_1$ and to output the initial rotor position angle $\theta_{initial}$, wherein n is the number of pole pairs of the doubly-fed electric machine.

Preferably, the apparatus further includes: a rotor voltage vector angle giving unit, a rotor current vector angle acquisition unit, a constant giving unit, a second comparator and a third comparator, wherein

the rotor voltage vector angle giving unit is configured to give a rotor voltage vector angle $\theta_{S1}$ and output it to a negative input of the second comparator;

the rotor current vector angle acquisition unit is configured to acquire a rotor current vector angle $\theta_{S2}$ and output it to a positive input of the second comparator;

the constant giving unit is configured to give a constant $\pi/2$ and output it to the positive input of the second comparator and a positive input of the third comparator;

the second comparator is configured to subtract the rotor voltage vector angle $\theta_{S1}$ from $\pi/_2$ and further add the rotor current vector angle $\theta_{S2}$ to the difference, and to output an error angle $\theta_{err}$ to a negative input of the third comparator;

the positive input of the third comparator is connected with an output of the first comparator to receive the initial rotor position angle $\theta_{inital}$;

the third comparator is configured to add the given constant $\pi/_2$ to the initial rotor position angle and further subtract the error angle $\theta_{err}$ from the sum, and to output an adjusted initial rotor position angle $\theta'_{initial}$,

wherein n is the number of pole pairs of the doubly-fed electric machine.

The present invention also provides a method for automatic detection of an initial rotor position angle of a doubly-fed electric machine, including:

acquiring a rotor mechanical angle $n \times \theta_{rotor}$ of the doubly-fed electric machine;
acquiring a grid voltage vector angle $\theta_2$ and a grid voltage vector amplitude $V_R$;
calculating a given reference voltage angle $\theta_{given}$ by the equation of $\theta_{given} = \theta_2 - \theta_{initial} - n \times \theta_{rotor}$;
generating a reference voltage vector with the grid voltage vector amplitude $V_R$ being its amplitude and the given reference voltage angle $\theta_{given}$ being its phase angle;
converting the reference voltage vector into a drive signal through SVPWM to drive a rotor-side PWM transformer to generate an AC voltage signal, and applying the AC voltage signal to a rotor winding of the doubly-fed electric machine;
acquiring a stator voltage vector angle $\theta_1$;
obtaining a phase-angle difference $\Delta\theta$ between the grid voltage and the stator voltage by subtracting the stator voltage vector angle $\theta_1$ from the grid voltage vector angle $\theta_2$; and
converting the phase-angle difference $\Delta\theta$ between the grid voltage and the stator voltage into the initial rotor position angle $\theta_{inital}$ by a proportional-integral algorithm,
wherein n is the number of pole pairs, and the initial rotor position angle $\theta_{inital}$ at the initial time is 0.

Preferably, after obtaining the initial rotor position angle the method further includes:

giving a rotor voltage vector angle $\theta_{S1}$ and acquiring a rotor current vector angle $\theta_{S2}$;

calculating an error angle $B_{err}$ from the rotor voltage vector angle $\theta_{S1}$ and the rotor current vector angle $\theta_{S2}$ by the

equation of $\theta_{err} = \dfrac{\pi}{2} - (\theta_{S1} - \theta_{S2})$; and

adjusting the calculated initial rotor position angle with the calculated error angle $\theta_{err}$ to obtain an adjusted initial

rotor position angle $\theta'_{inital}$ by the equation of $\theta'_{inital} = \theta_{inital} + (\dfrac{\pi}{2} - \theta_{err})$.

Preferably, the rotor of the doubly-fed electric machine is stationary or in motion.

The present invention also provides an apparatus for automatic detection of an initial rotor position angle of a doubly-fed electric machine, including: a rotor mechanical angle acquisition unit, a grid voltage vector angle acquisition unit, a grid voltage vector amplitude acquisition unit, a stator voltage vector angle acquisition unit, a fifth comparator, a PI controller, a fourth comparator, a second multiplier and SVPWM, wherein

the rotor mechanical angle acquisition unit is configured to acquire a rotor mechanical angular speed $n \times \theta_{rotor}$ and output it to a negative input of the fourth comparator;

the grid voltage vector angle acquisition unit is configured to acquire a grid voltage vector angle $\theta_2$ and output it to a positive input of the fourth comparator and a positive input of the fifth comparator;

the grid voltage amplitude acquisition unit is configured to acquire a grid voltage amplitude $V_R$ and output it to the second multiplier;

the stator voltage vector angle acquisition unit is configured to acquire a stator voltage vector angle $\theta_1$ and output it to a negative input of the fifth comparator;

the fifth comparator is configured to subtract the stator voltage vector angle $\theta_1$ from the grid voltage vector angle $\theta_2$ and to output a phase-angle difference $\Delta\theta$ between the grid voltage and the stator voltage to the PI controller;

the PI controller is configured to apply a proportional-integral algorithm to the phase-angle difference $\Delta\theta$ between the grid voltage and the stator voltage, to obtain the initial rotor position angle $\theta_{inital}$ and output it to the negative input of the fourth comparator;

the fourth comparator is configured to subtract the initial rotor position angle $\theta_{inital}$ and the rotor mechanical angular speed $n \times \theta_{rotor}$ from the grid voltage vector angle $\theta_2$ and to output a given reference voltage angle $\theta_{given}$ to the second multiplier;

the second multiplier is configured to multiply the received given reference voltage angle $\theta_{given}$ by the grid voltage amplitude $V_R$ and to output a reference voltage vector to the SVPWM; and

the SVPWM is configured to convert the reference voltage vector into a drive signal and send it to a rotor-side PWM transformer.

Preferably, the apparatus further includes: a rotor voltage vector angle giving unit, a rotor current vector angle acquisition unit, a constant giving unit, a second comparator and a third comparator, wherein

the rotor voltage vector angle giving unit is configured to give a rotor voltage vector angle $\theta_{S1}$ and output it to a negative input of the second comparator;

the rotor current vector angle acquisition unit is configured to acquire a rotor current vector angle $\theta_{S2}$ and output it to a positive input of the second comparator;

the constant giving unit is configured to give a constant $\pi/2$ and output it to the positive input of the second comparator and a positive input of the third comparator;

the second comparator is configured to subtract the rotor voltage vector angle $\theta_{S1}$ from $\pi/2$ and further add the rotor current vector angle $\theta_{S2}$ to the difference, and to output an error angle $\theta_{err}$ to a negative input of the third comparator;

the positive input of the third comparator is connected with an output of the fifth comparator to receive the initial rotor position angle $\theta_{inital}$; and

the third comparator is configured to add the given constant $\pi/2$ to the initial rotor position angle $\theta_{inital}$ and further subtract the error angle $\theta_{err}$ from the sum, and to output an adjusted initial rotor position angle $\theta'_{inital}$.

The embodiments of the present invention have the following advantages over the prior art:

In the first method and apparatus for automatic detection of an initial rotor position angle of a doubly-fed electric machine according to the embodiments of the present invention, a reference voltage vector is generated from a given reference voltage angle $\theta_{given}$ and a given reference voltage amplitude $V_{ref}$, to drive a rotor-side PWM transformer through SVPWM to generate an AC voltage signal, the AC voltage signal is applied to a rotor winding of the doubly-fed electric machine to control the rotation of the electric machine; and the initial rotor position angle $\theta_{inital}$ is derived from the acquired rotor mechanical angle $n \times \theta_{rotor}$ and the stator voltage vector angle $\theta_1$ by subtracting the rotor mechanical angle $n \times \theta_{rotor}$ and the given reference voltage angle $\theta_{given}$ from the stator voltage vector angle $\theta_1$.

With the method and apparatus according to the embodiment of the present invention, it is no longer needed to perform additional operations, and the initial rotor position angle can be detected automatically by a current converter.

In the second method and apparatus for automatic detection of an initial rotor position angle of a doubly-fed electric machine according to the embodiments of the present invention, the initial rotor position angle $\theta_{inital}$ is set to be 0 at the initial time, and a rotor mechanical angle $n \times \theta_{rotor}$, a grid voltage vector angle $\theta_2$ and a grid voltage vector amplitude are acquired. A given reference voltage angle $\theta_{given}$ is calculated from $\theta_{given} = \theta_2 - \theta_{inital} - n \times \theta_{rotor}$, and a reference voltage vector is generated with the grid voltage vector amplitude $V_R$ being its amplitude and the given reference voltage angle $\theta_{given}$ being its phase angle. Through SVPWM, the reference voltage vector drives a rotor-side PWM transformer to generate an AC voltage signal, which is applied to a rotor winding of the doubly-fed electric machine. A stator voltage vector angle $\theta_1$ is acquired, and a phase-angle difference $\Delta\theta$ between the grid voltage and the stator voltage is derived by subtracting the stator voltage vector angle $\theta_1$ from the grid voltage vector angle $\theta_2$, then the phase-angle difference $\Delta\theta$ between the grid voltage and the stator voltage is converted into the initial rotor position angle $\theta_{inital}$ by a proportional-integral algorithm.

With the method and apparatus according to the embodiment of the present invention, it is no longer needed to perform additional operations, and the initial rotor position angle can be detected automatically by a current convertor.

## Brief Description of the Drawings

FIG. 1 illustrates a position angle of a rotor winding of a doubly-fed electric machine;

FIG. 2A illustrates a structural diagram or an apparatus in the prior art for determining a position angle of a rotor winding of a doubly-fed electric machine;

FIG. 2B illustrates a circuit diagram of an apparatus in the prior art for determining a position angle of a rotor winding of a doubly-fed electric machine;

FIG. 3 illustrates an initial rotor phase angle of a doubly-fed electric machine;

FIG. 4 illustrates the relationship between phase-A axis, phase-a axis and the Z pulse position;

FIG. 5 illustrates a flow chart of a method for automatic detection of an initial rotor position angle of a doubly-fed electric machine according to a first embodiment of the present invention;

FIG. 6 illustrates the angles between a rotor voltage, a rotor flux linkage and a stator voltage;

FIG. 7 illustrates a flow chart of a method for automatic detection of an initial rotor position angle of a doubly-fed electric machine according to a second embodiment of the present invention;

FIG. 8 illustrates a structural diagram of an apparatus for automatic detection of an initial rotor position angle of a doubly-fed electric machine according to the first embodiment of the present invention;

FIG. 9 illustrates a structural diagram of an apparatus for automatic detection of an initial rotor position angle of a doubly-fed electric machine according to the second embodiment of the present invention;

FIG. 10 illustrates a vector diagram of a stator voltage;

FIG. 11 illustrates a flow chart of a method for automatic detection of an initial rotor position angle of a doubly-fed electric machine according to a third embodiment of the present invention;

FIG. 12 illustrates a flow chart of a method for automatic detection of an initial rotor position angle of a doubly-fed electric machine according to a fourth embodiment of the present invention; and

FIG. 13 illustrates a structural diagram of an apparatus for automatic detention of an initial rotor position angle of a doubly-fed electric machine according to the third embodiment of the present invention.

## Detailed Description of the Invention

The present invention will be described in details hereinafter with reference to the accompanying drawings and the embodiments, for better understanding of the objective, features and advantages of the present invention.

In a method for automatic detection of an initial rotor position angle of a doubly-fed electric machine according to a first embodiment of the present invention, a reference voltage vector is generated from a given reference voltage angle $\theta_{given}$ a given reference voltage amplitude $V_{ref}$, to drive a rotor-side PWM transformer through SVPWM to generate an AC voltage signal, the AC voltage signal is applied to a rotor winding of the doubly-fed electric machine to control the rotation of the electric machine; and the initial rotor position angle $\theta_{inital}$ is derived from the acquired rotor mechanical angle $n \times \theta_{rotor}$ and the stator voltage vector angle $\theta_1$ by subtracting the rotor mechanical angle $n \times \theta_{rotor}$ and the given reference voltage angle $\theta_{given}$ from the stator voltage vector angle $\theta_1$.

The relationship between the stator voltage (or current) frequency $f_{stator}$, the stator voltage (or current) frequency $f_{rotor1}$ and the slip frequency $f_{slip}$ of an asynchronous electric machine is:

$$f_{stator} = f_{rotor1} + f_{slip} \tag{2}$$

Hence:

$$\omega_{stator} = \omega_{rotor1} + \omega_{slip} \tag{3}$$

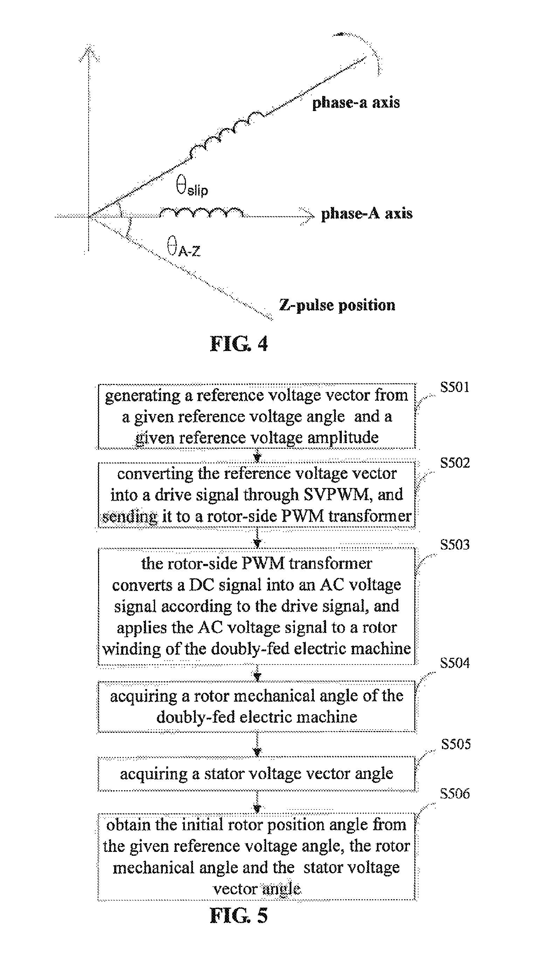

Reference is made to FIG. 4, illustrating the relationship between phase-A axis, phase-a axis and the Z pulse position.

For an electric machine with $n$ pole pairs, its stator phase-A axis is stationary, and its rotor phase-a axis rotates. When a sinusoidal voltage excitation $u_a(t) = Sin(\omega \cdot t)$ is applied to the rotor, the rotor voltage angle is $u_a(t) = Sin(\omega \cdot t)$. Then, the stator-side inductive voltage is $u_A(t) = Sin(\omega \cdot t + \theta_{slip})$, and the stator voltage vector angle ($\theta_1$ is:

$$\theta_1 = \omega \cdot t + \theta_{Slip} = \theta_{given} + \theta_{Slip} \qquad (4)$$

where $\theta_1$ is the angle of the stator voltage vector with respect to the position of phase-A axis, $\theta_{given}$ is the angle of the rotor voltage vector with respect to the position of phase-a axis, and $\theta_{slip}$ is the angle of the postion of phase-A axis with respect to the position of phase-a axis.

When an incremental encoder is used, $\theta_{rotor}$ is the mechanical angle at which the rotor rotates. Assuming the number of pole pairs of the electric machine is n, then a corresponding electrical angle in the vector diagram is $n \cdot \theta_{rotor}$, i.e., the angle with respect to the Z pulse position.

$\theta_{rotor}$ is 0 when phase-a axis rotates to the Z pulse position, and is $\theta_{A-Z}$ when phase-a axis rotates to the position of phase-A axis. Then:

$$\theta_{Slip} = n \cdot \theta_{rotor} - \theta_{A-Z} \qquad (5)$$

Assuming the positions $2 \cdot \pi$ and 0 of $\theta_{slip}$ are the same, we define $\theta_{inital} = 2 \cdot \pi - \theta_{A-Z}$, then:

$$\theta_{Slip} = n \cdot \theta_{rotor} + \theta_{inital} \qquad (6)$$

Incorporating Equations (4) and (6), we have:

$$\theta_{inital} = \theta_1 - n \cdot \theta_{rotor} - \theta_{given} \qquad (7)$$

Reference is made to FIG. 5, illustrating a flow chart of a method for automatic detection of an initial rotor position angle of a doubly-fed electric machine according to a first embodiment of the present invention.

In step S501, a reference voltage vector $\vec{V}_{ref}$ is generated from a given reference voltage angle $\theta_{given}$ and a given reference voltage amplitude $V_{ref}$.

In step S502, the reference voltage vector $\vec{V}_{ref}$ is converted through Space Vector Pulse Width Modulation (SVPWM) into a drive signal, which is sent to a rotor-side Pulse Width Modulation (PWM) transformer.

In step S503, the rotor-side PWM transformer converts a direct current (DC) signal into an alternating current (AC) voltage signal according to the drive signal, and the AC voltage signal is applied to the rotor winding of the doubly-fed electric machine.

In step S504, the rotor mechanical angle $n \times \theta_{rotor}$ of the doubly-fed electric machine is acquired.

The speed $N$ at which the rotor of the doubly-fed electric machine rotates is acquired by a rotary encoder connected coaxially with the rotor of the doubly-fed electric machine, and integration of the speed $N$ is performed to obtain the rotor mechanical angle $n \times \theta_{rotor}$ by which the doubly-fed electric machine rotates from the initial status to the current status,

where n is the number of pole pairs of the doubly-fed electric machine.

In step S505, the stator voltage vector angle $\theta_1$ is acquired.

A stator-side voltage sensor detects a stator-side inductive voltage signal $\vec{V}_A$ of the doubly-fed electric machine, and the stator voltage vector angle $\theta_1$ of the stator-side inductive voltage signal $\vec{V}_A$ is derived from phase calculation.

In step S506, the initial rotor position angle $\theta_{inital}$ of is calculated from the given reference voltage angle the rotor mechanical angle $n \times \theta_{rotor}$ and the stator voltage vector angle $\theta_1$.

$$\theta_{inital} = \theta_1 - n \cdot \theta_{rotor} - \theta_{given} \qquad (7)$$

With the detection method according to the first embodiment of the present invention, it is no longer needed to perform additional operations, and the initial rotor position angle can be detected automatically by a current convertor.

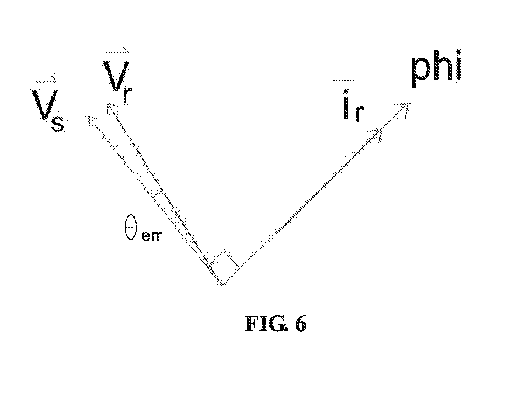

Reference is made to FIG. 6, illustrating a vector diagram of the angle between an inductive voltage and a flux vector of a doubly-fed electric machine.

As shown in FIG. 6, $\vec{i}_r$ is a rotor-side current vector, $\overrightarrow{phi}$ is a flux vector, and $\vec{V}_r$ and $\vec{V}_s$ are a rotor voltage vector angle and a stator voltage vector angle of the doubly-fed electric machine, respectively.

The rotor-side current vector $\vec{i}_r$ is consistent with the flux vector $\overrightarrow{phi}$. Both the rotor voltage vector angle $\vec{V}_r$ and the stator voltage vector angle $\vec{V}_s$ form an angle of 90˚ with the flux vector $\overrightarrow{phi}$.

The electric machine operates, and current passes through the coils of the electric machine, generating a magnetic field. Ideally, there are no magnetic core losses, and the angle 90˚ between the rotor voltage vector angle $\vec{V}_r$ and the flux vector $\overrightarrow{phi}$ remains unchanged.

However, in practice, due to hysteretic loss of the wire winding of the doubly-fed electric machine, with rotor-side excitation, the angle between the rotor-side current iiector $\vec{i}_r$ (magnetic potential) and the rotor voltage vector angle $\vec{V}_r$ is less than 90 degrees. The stator side carries no load, hence the angle between the rotor voltage vector angle $\vec{V}_r$ and the flux vector $\overrightarrow{phi}$ is 90'. Therefore, the rotor voltage vector angle $\vec{V}_r$ and the stator voltage vector angle $\vec{V}_s$ are not on the same axis, and the angle between them is $\theta_{err}$.

In order to address the error angle $\theta_{err}$, a method according to a second embodiment of the present invention further includes: calculating the error angle $\theta_{err}$, and adjusting the initial rotor position angle $\theta_{inital}$ calculated according to the first embodiment,

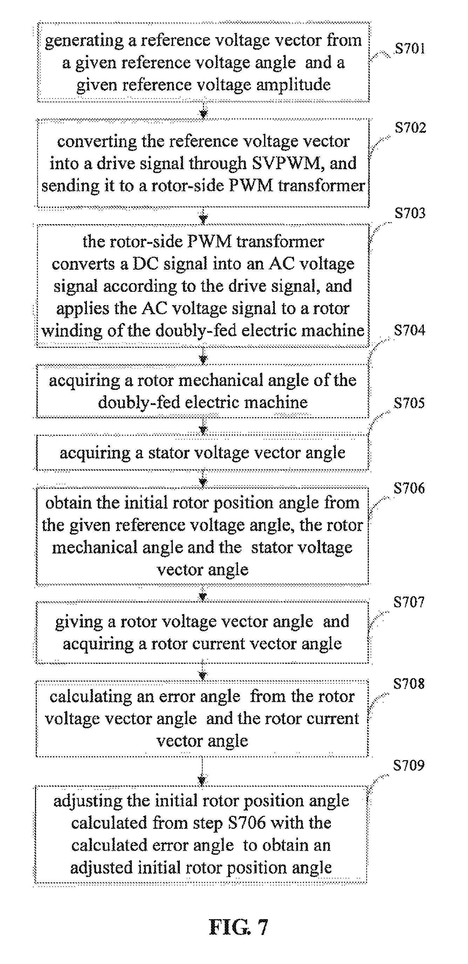

Reference is made to FIG. 7, illustrating a flow chart of a method for automatic detection of an initial rotor position angle of a doubly-fed electric machine according to a second embodiment of the present invention.

Steps S701 to S706 are the same as steps S501 to S506, and the following steps are performed after step S706:

In step S707, a rotor voltage vector angle $\theta_{S1}$ is given, and a rotor current vector angle $\theta_{S2}$ is acquired.

The rotor voltage vector angle $\theta_{S1}$ may equal to the given reference voltage angle $\theta_{given}$.

A rotor current sensor detects a rotor current signal $\vec{I}_r$ of the doubly-fed electric machine. And $\theta_{S2}$ of the current signal $\vec{I}_r$ is derived from phase calculation.

In step S708, an error angle $\theta_{err}$ is calculated from the rotor voltage vector angle $\theta_{S1}$ and the rotor current vector angle $\theta_{S2}$ by:

$$\theta_{err} = \frac{\pi}{2} - (\theta_{S1} - \theta_{S2}) \qquad (8)$$

In step S709, the initial rotor position angle $\theta_{initial}$ obtained in step S706 is adjusted by the calculated error angle $\theta_{err}$ into an adjusted initial rotor position angle $\theta'_{initial}$.

$$\theta'_{initial} = \theta_{initial} + (\frac{\pi}{2} - \theta_{err}) \qquad (9)$$

Based upon the first embodiment, the detection method according to the second embodiment of the present invention further includes the process of adjusting the initial rotor position angle, thereby effectively eliminate the error angle due to hysteretic loss of the wire winding of the doubly-fed electric machine in operation of the electric machine, and further improving the accuracy of detection of the initial rotor position angle.

An embodiment of the present invention further includes an apparatus for automatic detection of an initial rotor position angle of a doubly-fed electric machine.

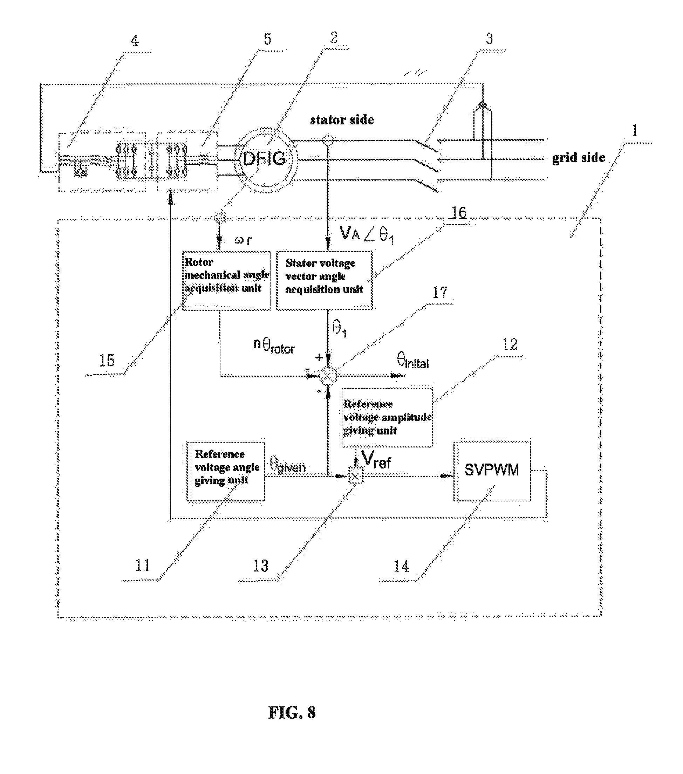

Reference is made to FIG. 8, illustrating a structural diagram of the apparatus for automatic detection of an initial rotor position angle of a doubly-fed electric machine according to the first embodiment of the present invention.

The stator side of a doubly-fed electric machine 2 is connected with a power grid through a grid connection switch 3. The power grid transmits an AC signal to a grid-side PWM transformer 4, which converts the AC signal to a DC signal. After filtered by a capacitor C 5 connected in parallel with the grid-side PWM transformer 4, the DC signal is input to a rotor-side PWM transformer 5. And according to a drive signal output by an apparatus 1 for automatic detection of an initial rotor position angle, the rotor-side PWM transformer 5 inverts the input DC signal into an AC signal and applies it to the rotator winding of the doubly-fed electric machine 2.

The apparatus 1 for automatic detection of an initial rotor position angle includes: a reference voltage angle giving unit 11, a reference voltage amplitude giving unit 12, a multiplier 13, SVPWM 14, a rotor mechanical angle acquisition unit 15, a stator voltage vector angle acquisition unit 16 and a comparator 17.

The reference voltage angle giving unit 11 is configured to give a reference voltage angle $\theta_{given}$ and output it to an input of the multiplier 13 and the negative input of the comparator 17.

The reference voltage amplitude giving unit 12 is configured to give a reference voltage amplitude $V_{ref}$ and output it to an input of the multiplier 13.

The multiplier 13 is configured to multiply the received given reference voltage angle $\theta_{given}$ by the given reference voltage amplitude $V_{ref}$ and to output a reference voltage vector to the SVPWM 14.

The SVPWM 14 is configured to convert the reference voltage vector into a drive signal and send it to the rotor-side PWM transformer 5.

The rotor mechanical angle acquisition unit 15 is connected with the rotor of the doubly-fed electric machine 2 to acquire a rotor mechanical angular speed $n \times \theta_{rutor}$ and output it to the negative input of the comparator 17.

Preferably, the rotor mechanical angle acquisition unit 15 may include a rotary encoder connected coaxially with the rotor of the doubly-fed electric machine 2 and an integrator.

The rotary encoder is configured to detect the speed $N$ at which the rotor of the doubly-fed electric machine 2 rotates.

The integrator is configured to integrate the speed $N$ at which the rotor rotates, to obtain the rotor mechanical angular speed $n \times \theta_{rotor}$ and output it to the negative input of the comparator 17,

where n is the number of pole pairs of the doubly-fed electric machine 2.

The stator voltage vector angle acquisition unit 16 is connected with the stator side of the doubly-fed electric machine 2 to acquire a stator voltage vector angle $\theta_1$ and output it to the positive input of the comparator 17.

Preferably, the stator voltage vector angle acquisition unit 16 may include a stator voltage sensor at the stator side and a phase angle extraction unit.

The stator voltage sensor is configured to detect a stator-side inductive voltage signal $\vec{V}_A$ ) of the doubly-fed electric machine 2.

The phase angle extraction unit is configured to extract the phase of the stator-side inductive voltage signal $\vec{V}_A$ to obtain the stator voltage vector angle $\theta_1$ and output it to the positive input of the comparator 17.

The comparator 17 is configured to subtract the rotor mechanical angular speed $n \times \theta_{rotor}$ and the given reference voltage angle $\theta_{given}$ from the stator voltage vector angle $\theta_1$ and to output the initial rotor position angle $\theta_{initial}$.

With the detection apparatus according to the first embodiment of the present invention, it is no longer needed to perform additional operations, and the initial rotor position angle can be detected automatically by a current convertor. When an encoder is used to obtain the rotor mechanical angle of the doubly-fed electric machine, manual setting of the initial rotor position angle is no longer needed for installation of the encoder, and additional power source or hardware equipment are not needed either. To change the encoder, no modification to the program is required.

In order to address the error angle $\theta_{err}$ between the rotor voltage vector angle $\vec{V}_r$ and the stator voltage vector angles $\vec{V}_S$, an apparatus according to the second embodiment of the present invention differs from the first embodiment in that, it further includes an error angle calculation unit configured to calculate the error angle $\theta_{err}$, and a rotor initial position angle adjusting unit configured to adjust the initial rotor position angle $\theta_{initial}$ output by the comparator 18 in the first embodiment.

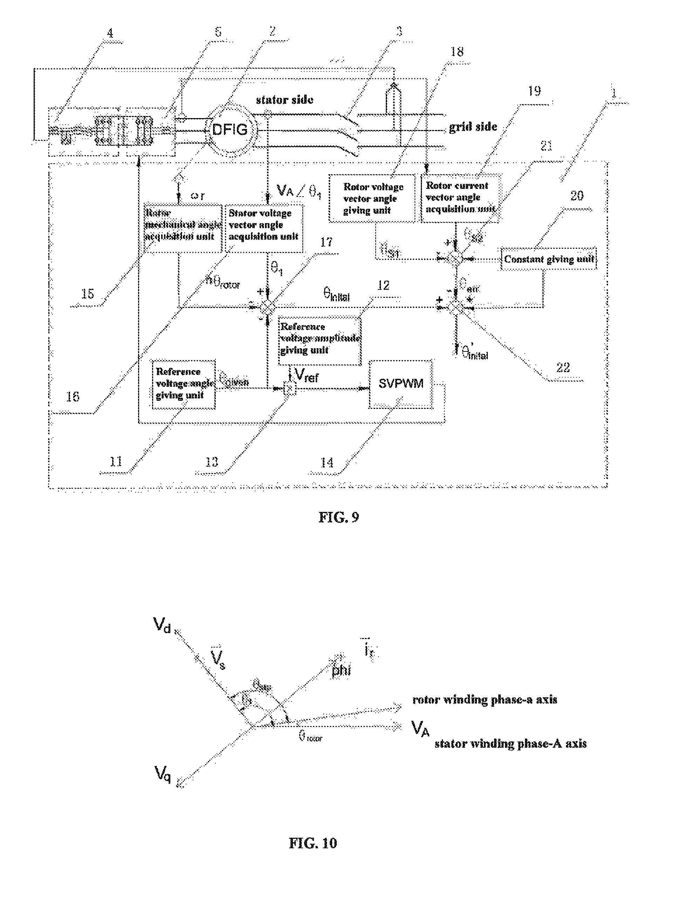

Reference is made to FIG. 9, illustrating a structural diagram of an apparatus for automatic detection of an initial rotor position angle of a doubly-fed electric machine according to the second embodiment.

The apparatus according to the second embodiment of the present invention differs from the first embodiment in that, the apparatus further includes a rotor voltage vector angle giving unit 18, a rotor current vector angle acquisition unit 19, a constant giving unit 20, a second comparator 21 and a third comparator 22.

The rotor voltage vector angle giving unit 18 is configured to give a rotor voltage vector angle $\theta_{S1}$ and output it to the negative input of the second comparator 21.

The rotor voltage vector angle $\theta_{S1}$ given by the rotor voltage vector angle giving unit 18 may equal to the given reference voltage angle $\theta_{given}$.

The rotor current vector angle acquisition unit 19 is connected with the rotor side of the doubly-fed electric machine 2 to acquire a rotor current vector angle $\theta_{S2}$ and output it to the positive input of the second comparator 21.

Preferably, the rotor current vector angle acquisition unit 19 may include a rotor current sensor at the rotor side of the doubly-fed electric machine 2 and a phase angle extraction unit.

The rotor current sensor is configured to detect a rotor-side inductive current signal $\vec{I}_r$ of the doubly-fed electric machine 2.

The phase angle extraction unit is configured to extract the phase angle of the rotor-side inductive current signal $\vec{I}_r$ to obtain the rotor voltage vector angle $\theta_{S1}$ and output it to the positive input of the second comparator 21.

The constant giving unit 20 is configured to give a constant $\pi/_2$ and output it to the positive input of the second comparator 21 and the positive input of the third comparator 22.

The second comparator 21 is configured to subtract the rotor voltage vector angle $\theta_{S1}$ from $\pi/_2$ and further add the rotor current vector angle $\theta_{S2}$ to the difference, and to output an error angle $\theta_{err}$ to the negative input of the third comparator 22.

The positive input of the third comparator 22 is connected with the output of the first comparator 17 to receive the initial rotor position angle $\theta_{initial}$

The third comparator 22 is configured to add the given constant $^{\pi}/_2$ to the initial rotor position angle and further subtract the error angle $\theta_{err}$ from the sum, and to output an adjusted rotor initial position angle $\theta'_{initial}$.

Reference is made to FIG. 10, illustrating a vector diagram of a stator voltage.

$V_A$ is a stator phase-A voltage vector, Va is a rotor phase-a voltage vector, and θrotor is the angle between the stator and the rotor. θrotor may also be referred to as the position angle of the rotor winding, because the stator is stationary. θ1 is the voltage vector angle, and θslip is the slip angle.

In vector control of a doubly-fed electric machine, θrotor is kept consistent with θ1 via θslip. Therefore, to ensure the precision of vector control, accurate position of θrotor has to be obtained.

In vector control of a doubly-fed electric machine, the rotor mechanical angle n×θrotor should be kept consistent with the stator voltage vector angle θ1 via the slip angle θslip. Therefore, when an initial rotor position angle $\theta_{initial}$ is calculated from the method according to the first embodiment of the present invention, in order to obtain an accurate position angle of the rotor winding with the rotor mechanical angle nxθrotor, the position angle of the rotor winding has to be compensated so that the position angle of the rotor winding is consistent with the stator voltage vector angle θ1, then, the stator side of the doubly-fed electric machine can be connected to the power grid, thereby realizing grid connection.

In order to address the issue above, an embodiment of the present invention also provides a method for automatic detection of an initial rotor position angle of a doubly-fed electric machine. The method according to a third embodiment of the present invention can keep the stator voltage consistent with the power grid voltage in both their phases and amplitudes while obtaining the initial rotor position angle $\theta_{initial}$, hence, grid connection can be done directly. Because of the proportional-integral algorithm, this method can effectively filter out interfering signals to angular measurement.

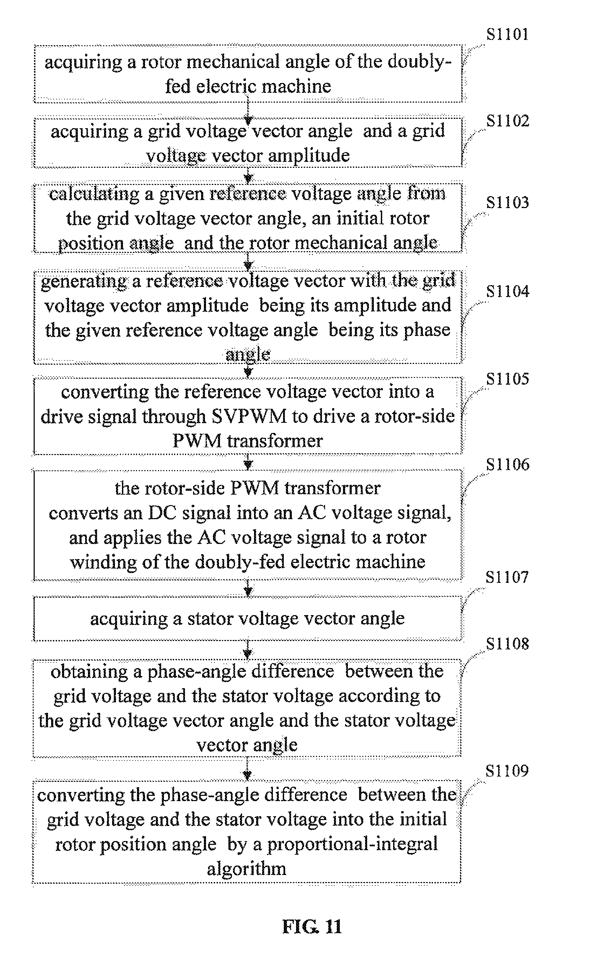

Reference is made to FIG. 11, illustrating a flow chart of the method for automatic detection of an initial rotor position angle of a doubly-fed electric machine according to the third embodiment of the present invention.

In step S1101, a rotor mechanical angle $n \times \theta_{rotor}$ of the doubly-fed electric machine is acquired;

A rotary encoder connected coaxially with the rotor of the doubly-fed electric machine acquires the speed $N$ at which the rotor of the doubly-fed electric machine rotates. The speed $N$ at which the rotor rotates is integrated, and the rotor mechanical angle $n \times \theta_{rotor}$ of the doubly-fed electric machine is obtained,

where n is the number of pole pairs of the doubly-fed electric machine.

In step S1102, a grid voltage vector angle $\theta_2$ and a grid voltage vector amplitude $V_R$ are acquired.

A voltage sensor at the grid side detects a grid voltage signal $\vec{V}_R$. The grid voltage vector angle $\theta_2$, and the grid voltage vector amplitude $V_R$ of the grid voltage signal $\vec{V}_R$ are obtained from phase and amplitude calculation respectively.

In step S1103, a given reference voltage angle $\theta_{given}$ is calculated from the grid voltage vector angle $\theta_2$ the initial rotor position angle $\theta_{initial}$ and the rotor mechanical angle $n \times \theta_{rotor}$.

$$\theta_{given} = \theta_2 - \theta_{initial} - n \times \theta_{rotor} \qquad (10)$$

It is assumed that the initial rotor position angle $\theta_{initial}$ is 0 at the initial time.

In step S1104, a reference voltage vector is generated with the grid voltage vector amplitude $V_R$ being its amplitude and the given reference voltage angle $\theta_{given}$ being its phase angle.

In step S1105, the reference voltage vector $\vec{V}_{ref}$ is converted through SVPWM into a drive signal, and the drive signal is sent to a PWM transformer at the rotor side.

In step S 106, the PWM transformer at the rotor side converts a DC signal into an AC voltage signal according to the drive signal, and the AC voltage signal is applied to the rotor winding of the doubly-fed electric machine.

In step S1107, a stator voltage vector angle $\theta_1$ is acquired.

A voltage sensor at the stator side detects a stator-side inductive voltage signal $\vec{V}_A$ of the doubly-fed electric machine. And the stator voltage vector angle $\theta_1$ of the stator side inductive voltage signal $\vec{V}_A$ is derived from phase calculation.

In step S1108, the phase-angle difference Δθ between the grid voltage and the stator voltage is calculated from the grid voltage vector angle $\theta_2$ and the stator voltage vector angle $\theta_1$.

$$\Delta\theta = \theta_2 - \theta_1 \qquad (11)$$

In step S1109, a proportional-integral algorithm is applied to the phase-angle difference $\Delta\theta$ between the grid voltage and the stator voltage by a PI controller, to obtain the initial rotor position angle $\theta_{initial}$.

With the detection method according to the third embodiment of the present invention, it is no longer needed to perform additional operations, and the initial rotor position angle can be detected automatically by a current converter. Also, the method according to the third embodiment can calculate the initial rotor position angle $\theta_{initial}$, as well as compensate the position angle of the rotor winding so that it is consistent with the stator voltage vector angle 01, hence, grid connection can be done directly. When an encoder is used to obtain the rotor mechanical angle of the doubly-fed electric machine, manual setting of the initial rotor position angle is no longer needed for installation of the encoder, and additional power source or hardware equipment are not needed either. To change the encoder, no modification to the program is required. The method can even be used without the Z pulse, with an encoder producing only A and B pulses, in which case the initial position can be the position of the rotor when it is powered on.

In order to address the error angle between the rotor voltage vector angle $\vec{V}_r$ and the stator voltage vector angle $\vec{V}_S$, a method according to a fourth embodiment of the present invention differs from the third embodiment in that it further includes: calculating the error angle $\theta_{err}$ and adjusting the initial rotor position angle $\theta_{initial}$ calculated according to the third embodiment.

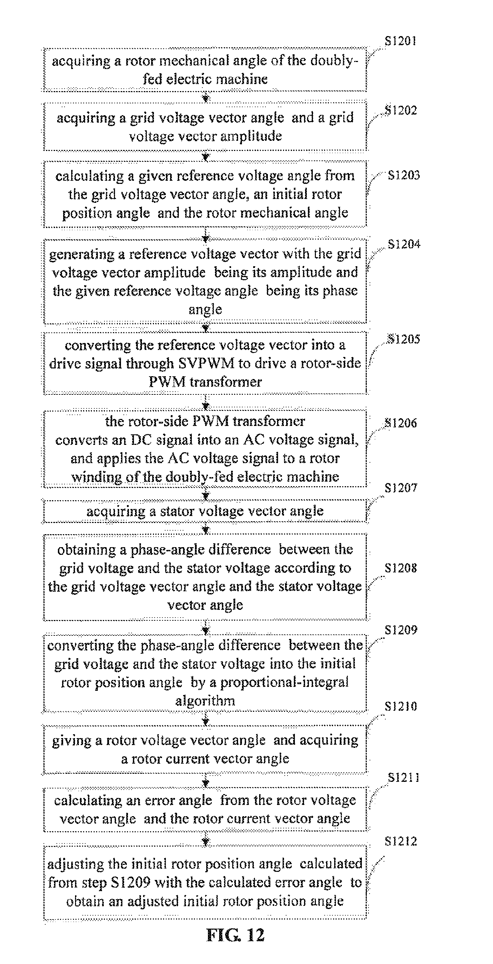

Reference is made to FIG. 12, illustrating a method for automatic detection of an initial rotor position angle of a doubly-fed electric machine according to the fourth embodiment of the present invention.

Steps S1201 to S1209 are the same as steps S1101 to S1109, and the following steps are further performed after step S1209:

In step S1210, a rotor voltage vector angle $\theta_{S1}$ is given, and a rotor current vector angle $\theta_{S2}$ is acquired.

A current sensor at the rotor side detects a rotor-side inductive current signal $\vec{I}_r$ of the doubly-fed electric machine. And the rotor current vector angle $\theta_{S2}$ at the rotor side is derived from phase calculation.

In step S1211, an error angle $\theta_{err}$ is calculated from the rotor voltage vector angle $\theta_{S1}$ and the rotor current vector angle $\theta_{S2}$.

$$\theta_{err} = \frac{\pi}{2} - (\theta_{S1} - \theta_{S2}) \qquad (8)$$

In step S1212, the initial position angle of the rotor calculated in step S1209 is adjusted with the calculated error angle $\theta_{err}$, and an adjusted initial rotor position angle $\theta_{initial}$ is obtained.

$$\theta'_{initial} = \theta_{initial} + (\frac{\pi}{2} - \theta_{err}) \qquad (9)$$

the detection method according to the fourth embodiment of the present invention, based upon the third embodiment, further includes the process of adjusting the initial rotor position angle, thereby effectively eliminating the error angle due to hysteretic loss of the wire winding of the doubly-led electric machine in operation of the electric machine, and further improving the accuracy of detection of the initial rotor position angle.

In order to address the slip angle θslip, an embodiment of the present invention also provides an apparatus for automatic detection of an initial rotor position angle of a doubly-fed electric machine. The apparatus according to the third embodiment of the present invention can calculate the initial rotor position angle $\theta_{initial}$, as well as compensate the position angle of the rotor winding so that it is consistent with the stator voltage vector angle θ1, hence, grid connection can be done directly.

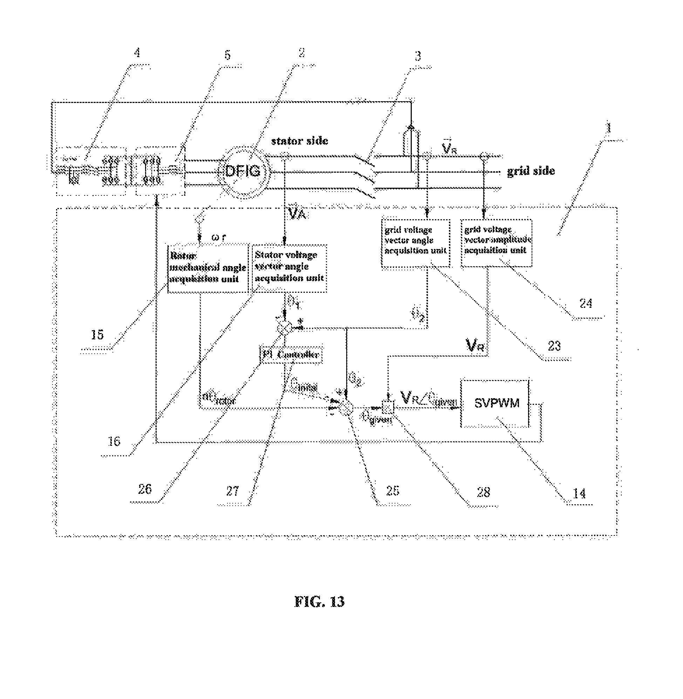

Reference is made to FIG. 13, illustrating a structural diagram of an apparatus for automatic detection of an initial rotor position angle of a doubly-fed electric machine according to the third embodiment of the present invention.

The stator side of a doubly-fed electric machine 2 is connected with a power grid through a grid connection switch 3. The power grid transmits an AC signal to a grid-side PWM transformer 4, which converts the AC signal to a DC signal. After filtered by a capacitor C 5 connected in parallel with the grid-side PWM transformer 4, the DC signal is input to a rotor-side PWM transformer 5. And according to a drive signal output by an apparatus 1 for automatic detection of an initial rotor position angle, the rotor-side PWM transformer 5 inverts the input DC signal into an AC signal and applies it to the rotator winding of the doubly-fed electric machine 2.

The apparatus 1 for automatic detection of an initial rotor position angle includes: a rotor mechanical angle acquisition unit 15, a grid voltage vector angle acquisition unit 23, a grid voltage vector amplitude acquisition unit 24, a stator voltage vector angle acquisition unit 16, a fifth comparator 26, a PI controller 27, a fourth comparator 25, a multiplier 28 and SVPWM 14.

The rotor mechanical angle acquisition unit 15 is connected with the rotor of the doubly-fed electric machine 2 to acquire a rotor mechanical angular speed $n \times \theta_{rutor}$ and output it to the negative input of the fourth comparator 25.

The grid voltage vector angle acquisition unit 23 is connected with the grid side to acquire a grid voltage vector angle $\theta_2$ and output it to the positive input of the fourth comparator 25 and the positive input of the fifth comparator 26.

Preferably, the grid voltage vector angle acquisition unit 23 may include a grid voltage sensor at the grid side and a phase angle extraction unit.

The grid voltage sensor is configured to detect a grid voltage signal $\vec{V}_R$.

The phase angle extraction unit is configured to extract the phase angle of the grid voltage signal $\vec{V}_R$ to obtain the grid voltage vector angle $\theta_2$.

The grid voltage amplitude acquisition unit 24 is connected with the grid side to acquire a grid voltage amplitude $V_R$ and output it to the second multiplier 28.

Preferably, the grid voltage amplitude acquisition unit 24 can be used as the phase angle extraction unit.

The grid voltage sensor is configured to detect a grid voltage signal $\vec{V}_R$.

The amplitude extraction unit is configured to extract the amplitude of the grid voltage signal $\vec{V}_R$ to obtain the grid voltage amplitude $V_R$.

The stator voltage vector angle acquisition unit 16 is connected with the stator side of the doubly-fed electric machine 2 to acquire a stator voltage vector angle $\theta_1$, and output it to the positive input of the fifth comparator 26.

The fifth comparator 26 is configured to subtract the stator voltage vector angle $\theta_1$ from the grid voltage vector angle $\theta_2$ and to output the phase-angle difference $\Delta\theta$ between the grid voltage and the stator voltage to the PI control 27.

The PI controller 27 is configured to apply a proportional-integral algorithm to the phase-angle difference $\Delta\theta$ between the grid voltage and the stator voltage, to obtain the initial rotor position angle $\theta_{initial}$, which is output to the negative input of the fourth comparator 25.

The fourth comparator 25 is configured to subtract the initial rotor position angle $\theta_{initial}$ and the rotor mechanical angular speed $n \times \theta_{rutor}$ from the grid voltage vector angle $\theta_2$, and to output a given reference voltage angle $\theta_{given}$ to the second multiplier 28.

The multiplier 28 is configured to multiply the received given reference voltage angle $\theta_{given}$ by the grid voltage amplitude $V_R$ and to output a reference voltage vector to the SVPWM 14.

The SVPWM 14 is configured to convert the reference voltage vector into a drive signal and send it to the PWM transformer 5 at the rotor side.

In order to address the error angle $\theta_{err}$ between the rotor voltage vector angle $\vec{V}_r$ and the stator voltage vector angle $\vec{V}_s$, the apparatus according to the fourth embodiment of the present invention differs from the third embodiment in that it further includes an error angle calculation unit configured to calculate the error angle $\theta err$ and a rotor initial position angle adjusting unit configured to adjust the initial rotor position angle $\theta_{initial}$ output by the PI controller 27 in the third embodiment.

The apparatus according to the fourth embodiment: of the present invention differs from the third embodiment in that the apparatus further includes a rotor voltage vector angle giving unit, a rotor current vector angle acquisition unit, a constant giving unit, a second comparator and a third comparator.

The rotor voltage vector angle giving unit is configured to give a rotor voltage vector angle $\theta_{S1}$ and output it to the negative input of the second comparator.

The rotor current vector angle acquisition unit is connected with the rotor side of the doubly-fed electric machine to acquire a rotor current vector angle $\theta_{S2}$ and output it to the positive input of the second comparator.

The constant giving unit is configured to give a constant $\pi/2$ and output it to the positive input of the second comparator and the positive input of the third comparator.

The second comparator is configured to subtract the rotor voltage vector angle $\theta_{S1}$ from $\pi/2$ and further add the rotor current vector angle $\theta_{S2}$ to the difference, and to output an error angle $\theta_{err}$ to the negative input of the third comparator.

The positive input of the third comparator is connected with the output of the fifth comparator to receive the initial rotor position angle $\theta_{initial}$.

The third comparator is configured to add the given constant $\pi/2$ to the initial rotor position angle and further subtract the error angle $\theta_{err}$ from the sum, and to output an adjusted initial rotor position angle $\theta'_{initial}$.

With the detection method and apparatus, it is no longer needed to perform additional operations, and the initial rotor position angle can be detected automatically by a current convertor.

Methods and apparatuses for automatic detection of an initial rotor position angle of a doubly-fed electric machine according to the embodiments of the present invention are described above. The principle and embodiments of the present invention are set forth in the specification by way of example, and the descriptions to the embodiments are merely for better understanding of the methods of the present invention and the essential idea thereof. Those skilled in the art can make alternations to the embodiments and applications of the present invention without departing from the scope of the present invention. Therefore, the disclosure herein should not be interpreted as limiting the scope of the present invention.

**Claims**

1. A method for automatic detection of an initial rotor position angle of a doubly-fed electric machine, comprising:

   generating a reference voltage vector from a given reference voltage angle $\theta_{given}$ and a given reference voltage amplitude $V_{ref}$ ;
   converting the reference voltage vector into a drive signal through Space Vector Pulse Width Modulation (SVPWM) to drive a rotor-side Pulse Width Modulation (PWM) transformer to generate an Alternating Current (AC) voltage signal, and applying the AC voltage signal to a rotor winding of the doubly-fed electric machine;
   acquiring a rotor mechanical angle $n \times \theta_{rotor}$ of the doubly-fed electric machine;
   acquiring a stator voltage vector angle $\theta_1$ ; and
   subtracting the rotor mechanical angle $n \times \theta_{rotor}$ and the given reference voltage angle $\theta_{given}$ from the stator voltage vector angle $\theta_1$, to obtain the initial rotor position angle $\theta_{initial}$,
   wherein n is the number of pole pairs of the doubly-fed electric machine.

2. The method according to claim 1, wherein after the obtaining the initial rotor position angle the method further comprises:

   giving a rotor voltage vector angle $\theta_{S1}$ and acquiring a rotor current vector angle $\theta_{S2}$ ;
   calculating an error angle $\theta_{err}$ from the rotor voltage vector angle $\theta_{S1}$ and the rotor current vector angle $\theta_{S2}$ by

   the equation of $\theta_{err} = \dfrac{\pi}{2} - (\theta_{S1} - \theta_{S2})$ ; and

   adjusting the calculated initial rotor position angle $\theta_{initial}$ with the calculated error angle $\theta_{err}$ to obtain an adjusted initial rotor position angle $\theta'_{initial}$ by the equation of $\theta'_{initai} = \theta_{initial} + (\dfrac{\pi}{2} - \theta_{err})$.

3. The method according to claim 1 or 2, wherein the rotor of the doubly-fed electric machine is in motion or rotates by at least one round.

4. An apparatus for automatic detection of an initial rotor position angle of a doubly-fed electric machine, comprising: a reference voltage angle giving unit, a reference voltage amplitude giving unit, a first multiplier, SVPWM, a rotor mechanical angle acquisition unit, a stator voltage vector angle acquisition unit and a first comparator, wherein
   the reference voltage angle giving unit is configured to give a reference voltage angle $\theta_{given}$ and output it to an input of the first multiplier and a negative input of the first comparator;
   the reference voltage amplitude giving unit is configured to give a reference voltage amplitude $V_{ref}$ and output it to an input of the first multiplier;
   the first multiplier is configured to multiply the given reference voltage angle $\theta_{given}$ by the given reference voltage amplitude $V_{ref}$ , and to output a reference voltage vector to the SVPWM;
   the SVPWM is configured to convert the reference voltage vector into a drive signal and send it to a rotor-side PWM transformer;
   the rotor mechanical angle acquisition unit is configured to acquire a rotor mechanical angular speed $n \times \theta_{rotor}$ and output it to the negative input of the first comparator;
   the stator voltage vector angle acquisition unit is configured to acquire a stator voltage vector angle $\theta_1$ and output it to a positive input of the first comparator; and
   the first comparator is configured to subtract the rotor mechanical angular speed $n \times \theta_{rotor}$ and the given reference voltage angle from the stator voltage vector angle $\theta_1$, and to output the initial rotor position angle $\theta_{initial}$ ,

wherein n is the number of pole pairs of the doubly-fed electric machine.

5. The apparatus according to claim 4, further comprising: a rotor voltage vector angle giving unit, a rotor current vector angle acquisition unit, a constant giving unit, a second comparator and a third comparator, wherein
the rotor voltage vector angle giving unit is configured to give a rotor voltage vector angle $\theta_{S1}$ and output it to a negative input of the second comparator;
the rotor current vector angle acquisition unit is configured to acquire a rotor current vector angle $\theta_{S2}$ and output it to a positive input of the second comparator;
the constant giving unit is configured to give a constant $\pi/_2$ and output it to the positive input of the second comparator and a positive input of the third comparator;
the second comparator is configured to subtract the rotor voltage vector angle $\theta_{S1}$ from $\pi/_2$ and further add the rotor current vector angle $\theta_{S2}$ to the difference, and to output an error angle $\theta_{err}$ to a negative input of the third comparator;
the positive input of the third comparator is connected with an output of the first comparator to receive the initial rotor position angle $\theta_{initial}$ ;
the third comparator is configured to add the given constant $\pi/_2$ to the initial rotor position angle $\theta_{initial}$ and further subtract the error angle $\theta_{err}$ from the sum, and to output an adjusted initial rotor position angle $\theta'_{initial}$,
wherein n is the number of pole pairs of the doubly-fed electric machine.

6. A method for automatic detection of an initial rotor position angle of a doubly-fed electric machine, comprising:

acquiring a rotor mechanical angle $n\times\theta_{rotor}$ of the doubly-fed electric machine;
acquiring a grid voltage vector angle $\theta_2$ and a grid voltage vector amplitude $V_R$ ;
calculating a given reference voltage angle $\theta_{given}$ by the equation of $\theta_{given} =\theta_2-\theta_{initial}-n\times\theta_{rotor}$ ;
generating a reference voltage vector with the grid voltage vector amplitude $V_R$ being its amplitude and the given reference voltage angle $\theta_{given}$ being its phase angle;
converting the reference voltage vector into a drive signal through SVPWM to drive a rotor-side PWM transformer to generate an AC voltage signal, and applying the AC voltage signal to a rotor winding of the doubly-fed electric machine;
acquiring a stator voltage vector angle $\theta_1$;
obtaining a phase-angle difference $\Delta\theta$ between the grid voltage and the stator voltage by subtracting the stator voltage vector angle $\theta_1$ from the grid voltage vector angle $\theta_2$; and
converting the phase-angle difference $\Delta\theta$ between the grid voltage and the stator voltage into the initial rotor position angle $\theta_{initial}$ by a proportional-integral algorithm,
wherein n is the number of pole pairs of the doubly-fed electric machine.

7. The method according to claim 6, after the obtaining the initial rotor position angle the method further comprises:

giving a rotor voltage vector angle $\theta_{S1}$, and acquiring a rotor current vector angle $\theta_{S2}$;
calculating an error angle $\theta_{err}$ from the rotor voltage vector angle $\theta_{S1}$ and the rotor current vector angle $\theta_{S2}$ by

the equation of $\theta_{err} = \dfrac{\pi}{2} - (\theta_{S1} - \theta_{S2})$ ; and

adjusting the calculated initial rotor position angle $\theta_{initial}$ with the calculated error angle $\theta_{err}$ to obtain an adjusted initial rotor position angle $\theta'_{initial}$ by the equation of $\theta'_{initial} = \theta_{initial} + (\dfrac{\pi}{2} - \theta_{err})$.

8. The method according to claim 6 or 7, wherein the rotor of the doubly-fed electric machine is stationary or in motion.

9. An apparatus for automatic detection of an initial rotor position angle of a doubly-fed electric machine, comprising:
a rotor mechanical angle acquisition unit, a grid voltage vector angle acquisition unit, a grid voltage vector amplitude acquisition unit, a stator voltage vector angle acquisition unit, a fifth comparator, a PI controller, a fourth comparator, a second multiplier and SVPWM, wherein
the rotor mechanical angle acquisition unit is configured to acquire a rotor mechanical angular speed $n\times\theta_{rotor}$, and output it to a negative input of the fourth comparator;
the grid voltage vector angle acquisition unit is configured to acquire a grid voltage vector angle $\theta_2$ and output it to a positive input of the fourth comparator and a positive input of the fifth comparator;
the grid voltage amplitude acquisition unit is configured to acquire a grid voltage amplitude $V_R$ and output it to the second multiplier;

the stator voltage vector angle acquisition unit is configured to acquire a stator voltage vector angle $\theta_1$ and output it to a negative input of the fifth comparator;

the fifth comparator is configured to subtract the stator voltage vector angle $\theta_1$ from the grid voltage vector angle $\theta_2$ and to output a phase-angle difference $\Delta\theta$ between the grid voltage and the stator voltage to the PI controller;

the PI controller is configured to apply a proportional-integral algorithm to the phase-angle difference $\Delta\theta$ between the grid voltage and the stator voltage, to obtain the initial rotor position angle and output it to the negative input of the fourth comparator;

the fourth comparator is configured to subtract the initial rotor position angle $\theta_{initial}$ and the rotor mechanical angular speed $n \times \theta_{rutor}$ from the grid voltage vector angle $\theta_2$, and to output a given reference voltage angle $\theta_{given}$ to the second multiplier;

the second multiplier is configured to multiply the received given reference voltage angle $\theta_{given}$ by the grid voltage amplitude $V_R$ and to output a reference voltage vector to the SVPWM; and

the SVPWM is configured to convert the reference voltage vector into a drive signal and send it to a rotor-side PWM transformer.

**10.** The apparatus according to claim 9, further comprising: a rotor voltage vector angle giving unit, a rotor current vector angle acquisition unit, a constant giving unit, a second comparator and a third comparator, wherein

the rotor voltage vector angle giving unit is configured to give a rotor voltage vector angle $\theta_{S1}$ and output it to a negative input of the second comparator;

the rotor current vector angle acquisition unit is configured to acquire a rotor current vector angle $\theta_{S2}$ and output it to a positive input of the second comparator;

the constant giving unit is configured to give a constant $\pi/_2$ and output it to the positive input of the second comparator and a positive input of the third comparator;

the second comparator is configured to subtract the rotor voltage vector angle $\theta_{S1}$ from $\pi/_2$ and further add the rotor current vector angle $\theta_{S2}$ to the difference, and to output an error angle $\theta_{err}$ to a negative input of the third comparator;

the positive input of the third comparator is connected with an output of the fifth comparator to receive the initial rotor position angle $\theta_{initial}$ ; and

the third comparator is configured to add the given constant $\pi/_2$ to the initial rotor position angle $\theta_{initial}$ and further subtract the error angle $\theta_{err}$ from the sum, and to output an adjusted initial rotor position angle $\theta'_{initial}$.

**FIG. 1**

rotor winding phase-a axis

encoder Z pulse position

**FIG. 2A**

**FIG. 2B**

phase-A axis , phase-a axis

Z-pulse position

**FIG. 3**

phase-a axis

$\theta_{slip}$

phase-A axis

$\theta_{A-Z}$

Z-pulse position

**FIG. 4**

| | |
|---|---|
| generating a reference voltage vector from a given reference voltage angle and a given reference voltage amplitude | S501 |
| converting the reference voltage vector into a drive signal through SVPWM, and sending it to a rotor-side PWM transformer | S502 |
| the rotor-side PWM transformer converts a DC signal into an AC voltage signal according to the drive signal, and applies the AC voltage signal to a rotor winding of the doubly-fed electric machine | S503 |
| acquiring a rotor mechanical angle of the doubly-fed electric machine | S504 |
| acquiring a stator voltage vector angle | S505 |
| obtain the initial rotor position angle from the given reference voltage angle, the rotor mechanical angle and the stator voltage vector angle | S506 |

**FIG. 5**

FIG. 6

generating a reference voltage vector from a given reference voltage angle and a given reference voltage amplitude — S701

converting the reference voltage vector into a drive signal through SVPWM, and sending it to a rotor-side PWM transformer — S702

the rotor-side PWM transformer converts a DC signal into an AC voltage signal according to the drive signal, and applies the AC voltage signal to a rotor winding of the doubly-fed electric machine — S703

acquiring a rotor mechanical angle of the doubly-fed electric machine — S704

acquiring a stator voltage vector angle — S705

obtain the initial rotor position angle from the given reference voltage angle, the rotor mechanical angle and the stator voltage vector angle — S706

giving a rotor voltage vector angle and acquiring a rotor current vector angle — S707

calculating an error angle from the rotor voltage vector angle and the rotor current vector angle — S708

adjusting the initial rotor position angle calculated from step S706 with the calculated error angle to obtain an adjusted initial rotor position angle — S709

FIG. 7

**FIG. 8**

**FIG. 9**

**FIG. 10**

acquiring a rotor mechanical angle of the doubly-fed electric machine

S1101

acquiring a grid voltage vector angle and a grid voltage vector amplitude

S1102

calculating a given reference voltage angle from the grid voltage vector angle, an initial rotor position angle and the rotor mechanical angle

S1103

generating a reference voltage vector with the grid voltage vector amplitude being its amplitude and the given reference voltage angle being its phase angle

S1104

converting the reference voltage vector into a drive signal through SVPWM to drive a rotor-side PWM transformer

S1105

the rotor-side PWM transformer converts an DC signal into an AC voltage signal, and applies the AC voltage signal to a rotor winding of the doubly-fed electric machine

S1106

acquiring a stator voltage vector angle

S1107

obtaining a phase-angle difference between the grid voltage and the stator voltage according to the grid voltage vector angle and the stator voltage vector angle

S1108

converting the phase-angle difference between the grid voltage and the stator voltage into the initial rotor position angle by a proportional-integral algorithm

S1109

**FIG. 11**

acquiring a rotor mechanical angle of the doubly-fed electric machine — S1201

acquiring a grid voltage vector angle and a grid voltage vector amplitude — S1202

calculating a given reference voltage angle from the grid voltage vector angle, an initial rotor position angle and the rotor mechanical angle — S1203

generating a reference voltage vector with the grid voltage vector amplitude being its amplitude and the given reference voltage angle being its phase angle — S1204

converting the reference voltage vector into a drive signal through SVPWM to drive a rotor-side PWM transformer — S1205

the rotor-side PWM transformer converts an DC signal into an AC voltage signal, and applies the AC voltage signal to a rotor winding of the doubly-fed electric machine — S1206

acquiring a stator voltage vector angle — S1207

obtaining a phase-angle difference between the grid voltage and the stator voltage according to the grid voltage vector angle and the stator voltage vector angle — S1208

converting the phase-angle difference between the grid voltage and the stator voltage into the initial rotor position angle by a proportional-integral algorithm — S1209

giving a rotor voltage vector angle and acquiring a rotor current vector angle — S1210

calculating an error angle from the rotor voltage vector angle and the rotor current vector angle — S1211

adjusting the initial rotor position angle calculated from step S1209 with the calculated error angle to obtain an adjusted initial rotor position angle — S1212

FIG. 12

FIG. 13

## INTERNATIONAL SEARCH REPORT

International application No.

PCT/CN2009/075929

**A. CLASSIFICATION OF SUBJECT MATTER**

See extra sheet

According to International Patent Classification (IPC) or to both national classification and IPC

**B. FIELDS SEARCHED**

Minimum documentation searched (classification system followed by classification symbols)

IPC:H02P 21/-

Documentation searched other than minimum documentation to the extent that such documents are included in the fields searched

Electronic data base consulted during the international search (name of data base and, where practicable, search terms used)

CPRS, CNKI, WPI, EPODOC   DFIG, double, fed, feed, feedback, motor, generator, machine, rotor, angle, detect, measure

**C. DOCUMENTS CONSIDERED TO BE RELEVANT**

| Category* | Citation of document, with indication, where appropriate, of the relevant passages | Relevant to claim No. |
|---|---|---|
| P,X | CN 101459406 A(SANY ELECTRIC CO.,LED )17 June 2009(17.06.2009) claims 1-10 | 1-10 |
| A | CN 101272118 A(NANJING AUTOMATION RES INST et al.)24 September 2008(24.09.2008) page 1, line 18 to page 6, line 15 of the description, Figs.1-2 | 1-10 |
| A | CN 1062391 C (INST ELECTRICAL ENG CHINESE ACAD SCI) 21 February 2001(21.02.2001) the whole document | 1-10 |
| A | US 6856114 B2(CONTINENTAL TEVES AG & CO OHG)15 February 2005(15.02.2005) the whole document | 1-10 |

☐ Further documents are listed in the continuation of Box C.    ☒ See patent family annex.

|  |  |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 March 2010(16.03.2010) | **01 Apr. 2010 (01.04.2010)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>DING Dongxia<br><br>Telephone No. (86-10)62411873 |
|---|---|

Form PCT/ISA /210 (second sheet) (July 2009)

**INTERNATIONAL SEARCH REPORT**
Information on patent family members

International application No.

PCT/CN2009/075929

| Patent Documents referred in the Report | Publication Date | Patent Family | Publication Date |
|---|---|---|---|
| CN 101459406 A | 17.06.2009 | NONE | |
| CN 101272118 A | 24.09.2008 | NONE | |
| CN 1062391 C | 21.02.2001 | CN 1148168 A | 23.04.1997 |
| US 6856114 B2 | 15.02.2005 | US 2004150364 A1 | 05.08.2004 |
| | | DE 10220122 A1 | 19.12.2002 |
| | | WO 02097961 A1 | 05.12.2002 |
| | | EP 1397858 A1 | 17.03.2004 |
| | | JP 2004522398 T | 22.07.2004 |

Form PCT/ISA /210 (patent family annex) (July 2009)

**INTERNATIONAL SEARCH REPORT**

International application No.

PCT/CN2009/075929

Continuation of : A. CLASSIFICATION OF SUBJECT MATTER:

H02P 21/00 (2006.01) i

H02P 21/14 (2006.01) i

CORRECTED SHEET

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200810208061